# EUROPÄISCHE PATENTSCHRIFT

(11) **EP 0 775 521 B1**
(45) Veröffentlichungstag und Bekanntmachung des Hinweises auf die Patenterteilung: **13.06.2001**
(21) Anmeldenummer: 96118659.0
(22) Anmeldetag: 21.11.1996
(51) Int. Cl.: B01J 29/40, B01J 21/12, C10G 11/05

(54) **Verfahren zur Herstellung von Katalysatoren oder Katalysator-Additiven sowie Katalysator oder Katalysator-Additiv und seine Verwendung**
Preparation process of catalysts and catalysts additives and a catalyst or catalyst additive and the use thereof
Procédé de préparation de catalyseur ou d'additifs pour catalyseur ainsi qu'un catalyseur ou additif pour catalyseur et son utilisation

(30) Priorität: 22.11.1995 HU 9503334
(43) Veröffentlichungstag der Anmeldung: 28.05.1997
(73) Patentinhaber: MOL MAGYAR OLAJ ES GAZIPARI RESZVENYTARSASAG, H-1117 Budapest (HU)
(72) Erfinder: Balai, Mária, 2440 Százhalombatta (HU); Beyer, Hermann, Dr., 1027 Budapest (HU); Czágler, István, 2440 Szazhalombatta (HU); Csoka, Arpád, 2440 Százhalombatta (HU); Fehér, Pál, Dr., 2440 Százhalombatta (HU); Forstner, János, 2440 Százhalombatta (HU); Galambos, Lászlo, 2440 Százhalombatta (HU); Kántor, Lászlo, 2440 Százhalombatta (HU); Katona, Antal, 2440 Százhalombatta (HU); Lenkei, Mária, Dr., 1107 Budapest (HU); Pál née Borbély, Gabriella, Dr., 1163 Budapest (HU); Sulyok, Tamás, Dr., 2120 Dunakeszi (HU); Szirmai, Lászlo, 2030 Erd (HU); Tátrai, Eszter, 1103 Budapest (HU); Terényi née Gavrikova, Olga, Dr., 1103 Budapest (HU); Tolvaj, Gábor, 1030 Erd (HU)
(74) Vertreter: Beszédes, Stephan G., Dr.

(56) Entgegenhaltungen:
- EP-A- 0 156 490
- EP-A- 0 472 144
- EP-A- 0 545 179
- EP-A- 0 600 686
- DD-A- 227 887

## Beschreibung

Die Erfindung betrifft ein Verfahren zur Herstellung von Katalysatoren oder Katalysator-Additiven sowie ein(en) Katalysator oder Katalysator-Additiv und seine Verwendung.

Es ist bekannt, daß die unter dem Namen "fluid catalytic cracking" (im folgenden kurz FCC-Katalysatoren genannt) bekannt gewordene Umwandlung von hochsiedenden Erdölfraktionen in niedrigsiedende, in erster Linie als Kraftstoff für Benzin- und Dieselmotoren geeignete Fraktionen seit Jahrzehnten das wirtschaftlich bedeutendste und hinsichtlich des aufgearbeiteten Volumens größte Verfahren der Petrochemie ist. Als bedeutender verfahrenstechnischer bzw. technologischer Fortschritt hat sich die Verwendung von Zeolithen als aktive Komponente von FCC-Katalysatoren erwiesen, insbesondere die von in die Wasserstoff-Form überführten Zeolithen des Faujasit-Typs (C. J. Plank und E. J. Rosinski: Chem. Eng. Prog. Symp. Ser. 73, 26 [1967]).

In den letzten Jahren wurden zahlreiche Verfahren veröffentlicht, deren innovatives Wesen darin besteht, daß neben einem als aktive Komponente von FCC-Katalysatoren verwendeten Zeolith des Faujasit-Typs auch 1 oder mehrere Zeolithe anderen Typs, im allgemeinen H-ZSM-5, zur Anwendung kommen und dadurch im Hinblick auf die Octanzahl und die umweltschädlichen Wirkungen der Verbrennungsprodukte vorteilhafter zusammengesetzte Crackprodukte erhalten werden. Die diesbezüglich im Patentschrifttum veröffentlichten Verfahren können in 2 Gruppen unterteilt werden:
a) Der gemeinsame Wesenszug der zur ersten Gruppe gehörenden Verfahren besteht darin, daß neben dem faujasithaltigen Katalysator 1 oder mehrere andere katalytisch aktive Komponenten enthaltende zusammengesetzte Katalysatoren für sich in Form von fluidisierbaren Teilchen geeigneter Zusammensetzung in den Reaktionsbehälter eingebracht werden.
b) Zur zweiten Gruppe gehören diejenigen Verfahren, bei denen 2 oder mehrere aktive zeolithische Komponenten in entsprechenden Mengenverhältnissen zusammen in die FCC-Katalysatorteilchen eingearbeitet werden, in denen also die aktiven zeolithischen Komponenten in Form diskreter, homogen verteilter Kristallite vorliegen.

Die zur ersten Gruppe gehörenden, in jedem beliebigen Mengenverhältnis für sich dosierbaren Katalysatoren gewährleisten eine größere Flexibilität des FCC-Verfahrens, da durch Wahl entsprechender Mengenverhältnisse das Verfahren den im Hinblick auf die Produktzusammensetzung und die aufzuarbeitenden Rohstoffe zu stellenden Anforderungen angepaßt werden kann.

Nach der EP-B-229 609 wird ein Katalysator aus einem mit einer kolloidalen Aluminiumoxid- und/oder Siliciumdioxid-Lösung gebundenen Tonmineral-Matrix und fein dispergiertem H-ZSM-5-Zeolith hergestellt, der, mit einem herkömmlichen FCC-Katalysator zusammen verwendet, die Umwandlung von hochsiedenden Erdölfraktionen zu Benzinfraktionen von hoher Octanzahl ermöglicht.

Nach der US-A-4 309 279 kann die Olefinausbeute des FCC-Verfahrens, im wesentlichen auf Kosten der Benzinfraktion, von 14,4 auf 21 Vol.-% und die Versuchsoctanzahl der Benzinfraktion von 89,2 auf 91,9 erhöht werden, wenn zusammen mit dem herkömmlichen FCC-Katalysator ein fluidisierbares Katalysator-Additiv mit 0,5 Masse-% H-ZSM-5-Zeolith als weitere aktive Komponente zur Anwendung kommt.

In der EP-B-156 490 wird ebenfalls ein Verfahren beschrieben, dessen Wesen darin besteht, daß ein Gemisch von 2 fluidisierbaren Katalysatoren als FCC-Katalysator zur Anwendung kommt. Eine Komponente des Gemisches ist ein herkömmlicher, Faujasit enthaltender FCC-Katalysator, die zweite ein aus einer amorphen Aluminosilicat-Phase mit in einer Menge von 0,1 bis 20 Masse-% eingebettetem H-ZSM-5-Zeolith bestehender fluidisierbarer Katalysator. Der Anteil der H-ZSM-5-Zeolith enthaltenden Komponente kann 0,1 bis 50 Masse-% betragen. Während die Zugabe von 2 Masse-% der bei 788°C 25 Stunden mit Wasserdampf behandelten, H-ZSM-5-Zeolith enthaltenden Komponente die Zusammensetzung des Produktes praktisch nicht beeinflußt, hat die in gleicher Menge zugegebene frische, nicht mit Wasserdampf behandelte Komponente eine wesentliche Erhöhung der C₃/C₄-Fraktion und, innerhalb derer, des Anteiles der olefinischen Produkte sowie eine Erhöhung der Octanzahl der in geringerer Menge gebildeten Benzinfraktion zur Folge.

Das Wesentliche der EP-B-600 686 besteht ebenfalls darin, daß ein aus einem 12,24 Masse-% ultrastabilisierten Y-Zeolith enthaltenden FCC-Katalysator und einem 2,5 bis 57,5 Masse-% H-ZSM-5-Zeolith enthaltenden fluidisierbaren Katalysator-Additiv bestehendes Gemisch zum Cracken von hochsiedenden Fraktionen, zum Beispiel Dieselöl-Vakuumdestillaten, verwendet wird. Durch Zugabe von bis zu 60 Masse-% des letzteren Katalysator-Additives zu herkömmlichen FCC-Katalysatoren wird eine wesentliche Erhöhung der Olefinfraktion des Produktes erreicht, zum Beispiel von 16 Masse-% auf 36 Masse-%.

Die US-A-3 758 403 betrifft einen FCC-Katalysator, der durch gemeinsamen Einbau eines weitporigen Zeolithes, vorzugsweise vom Faujasit-Typ, und eines mittelporigen, vorzugsweise zur Pentasil-Familie gehörenden Zeolithes, in Form diskreter Kristallite in eine entsprechende Matrix erhalten wurde, und dessen Verwendung zur Erzeugung von Benzinen mit hoher Octanzahl.

In der US-A-5 077 253 wird über einen vorteilhafte Eigenschaften, in erster Linie eine hohe Schwermetallbindungs-Kapazität, aufweisenden FCC-Katalysator berichtet, der einen weitporigen Zeolith, vorzugsweise dealuminierten Y-Zeolith, einen über Crack- und Isomerisierungsaktivität verfügenden Zeolith, vorzugsweise H-ZSM-5, und eine die Aromatisierung katalysierende zeolithische Komponente, vorzugsweise Ga-ZSM-5, in der äußeren Schale der Katalysatorteilchen in niedrigerer, im Kern dagegen in höherer Konzentration enthält.

Das Wesentliche des in der EP-B-489 324 beschriebenen, zur selektiven Herstellung von olefinischen und aromatischen Verbindungen geeigneten und Benzin hoher Octanzahl ergebenden Verfahrens besteht darin, daß ω- und Y-Zeolith gleichzeitig als Katalysator zur Anwendung kommen.

In der US-A-3 894 934 wird über die Verwendung von Zeolithen des Faujasit- und H-ZSM-5-Typs als FCC-Katalysatoren berichtet, wobei die 2 Zeolithe entweder in einer Matrix homogen verteilt vorliegen oder die aktive Komponente von verschiedenen Katalysatoren bilden. Im letzteren Fall üben die 2 je 1 der aktiven Komponenten enthaltenden Katalysatoren ihre Wirkung getrennt in 2 im Crack-Reaktionsbehälter voneinander örtlich getrennten Reaktionszonen aus.

Mit den im Patentschrifttum veröffentlichten, die Verformung von FCC-Katalysatoren oder Katalysator-Additiven betreffenden Verfahren können durch Sprühtrocknung von die katalytisch aktive(n) zeolithische(n) Komponente(n) sowie 1 oder mehrere geeignete[n] Füllstoff(e) enthaltenden wäßrigen Aufschlämmungen kugelförmige oder nahezu kugelförmige Katalysatorteilchen entsprechender Größe erhalten werden. Als Füllstoffe kommen im allgemeinen Kaolin(it) oder andere Tonmineralien in einer auf den gesamten Feststoffanteil bezogenen Menge von 20 bis 70 Masse-% zur Anwendung (zum Beispiel US-A-3 142 057, US-A-3 867 308 und US-A-4 086 187). Als Bindemittel kommen im allgemeinen Aluminiumhydroxy-Verbindungen (zum Beispiel US-A-4 458 023 und CA-A-967 136) und Kiesel-Hydrosol (zum Beispiel US-A-3 972 835 und US-A-3 867 308) für sich allein oder mit je 1 ausgewählten Siliciumdioxid- oder Aluminiumoxid-Komponente zusammen in innerhalb verhältnismäßig weiter Grenzen variierten Anteilen, im allgemeinen in einer 5 bis 50 Masse-% des Feststoffanteiles ausmachenden Menge (zum Beispiel US-A-3 957 689 und US-A-4 493 902) zur Anwendung. Dem Gewichtsverhältnis von Feststoff zu Wasser in der zu versprühenden Aufschlämmung setzen einerseits die die Versprühbarkeit bestimmende Viskosität, andererseits der zwischen 20 und 100 µm zu haltende Durchmesser der herzustellenden Katalysator-Teilchen Grenzen. Der Wassergehalt der zu versprühenden Aufschlämmung beträgt im allgemeinen 20 bis 60 Masse-%. Zur Erreichung günstiger mechanischer Eigenschaften, insbesondere einer hohen Abriebfestigkeit, wird nach einigen, zum Beispiel den in US-A-4 677 084 und US-A-4 493 902 sowie in DE-B-3 001 800 und DE-B-3 317 946 angegebenen Verfahren, das durch Zerstäubungstrocknung erhaltene Produkt mehrere Stunden bei höheren, zwischen 300 und 800°C liegenden Temperaturen calciniert.

Der gemeinsame Wesenszug der bisher beschriebenen Katalysatoren und Anwendungsverfahren besteht darin, daß mit deren Hilfe neben der Erhöhung der Octanzahl der beim FCC-Verfahren erhaltenen Benzinfraktion die Ausbeute an C₃- bis C₅-Olefinen, auf Kosten der Benzinfraktion, signifikant erhöht wird. Die erwähnten Patentschriften gehen aber nicht auf die Anteile der einzelnen Butene und Pentene in den entsprechenden Fraktionen ein. Gegenwärtig ist in erster Linie Isobuten eines der gefragtesten petrochemischen Produkte, da dieses, neben Methanol, bei der Herstellung eines der die Octanzahl von bleifreiem Benzin erhöhenden Additives, des Methyl-tert.-butyl-äthers (MTBE), im großtechnischen Maßstab als Ausgangsmaterial Anwendung findet. Es ist deshalb erwünscht, die sich auf Isobuten beziehende Selektivität des FCC-Verfahrens durch Gerüstisomerisierung der übrigen Butene zu erhöhen.

Der Erfindung liegt die Aufgabe zugrunde, ein Verfahren zur Herstellung von überlegene, insbesondere mechanische, Eigenschaften aufweisenden und die Erzeugung von für die Praxis am meisten gewünschten Produkten bevorzugt fördernden Katalysatoren oder Katalysator-Additiven, geeignet zum Cracken von Erdölfraktionen, insbesondere zu Olefinen mit verzweigter Kohlenstoffkette, vor allem Isobuten, sowie solche Katalysatoren oder Katalysator-Additive und deren Verwendung zu schaffen.

Das Obige wurde überraschenderweise durch die Erfindung erreicht.

Im Laufe eigener Untersuchungen wurde nämlich überraschenderweise festgestellt, daß Aluminium enthaltende Kieselsäure-Modifikationen der allgemeinen Formel (I)

H_{4+y-z}[(SiO_{4/2})_{x-y}(AlO_{4/2})_{y}(SiO_{3/2}O)_{4-z}(AlO_{3/2})_{z}], (I)

worin
y < 1 ,
z < 1 und
x = 0, 4, 10 oder 16 bis 18 ist,
   wobei,
   falls x = 0 ist,
   auch y = 0 darstellt,
erhältlich aus Aluminium enthaltenden Natriumsilikat-Modifikationen durch Ionenaustausch, in erster Linie die mit der aus Magadiit durch Ionenaustausch erhaltenen Kieselsäure isostrukturelle Modifikation mit x = 10, bei geeigneter Wahl der Reaktionsbedingungen, zweckmäßig bei Temperaturen von 300 bis 400°C und Raumgeschwindigkeiten von 2 bis 10 h⁻¹ unter Atmosphärendruck durch Einführen des Reaktionsmittels bzw. des Reaktionsmittelgemisches unverdünnt oder mit einem inerten Gas, vorzugsweise Stickstoff, im Volumverhältnis bis 1 : 5 verdünnt in die Reaktionsvorrichtung, die Gerüstisomerisierung von kurzkettigen unverzweigten Olefinen, in erster Linie von n-Butenen, zu verzweigtkettigen, ein quartäres C-Atom enthaltenden Olefinen katalysieren.

Im Laufe dieser Untersuchungen wurde auch überraschenderweise festgestellt, daß, wenn die die Gerüstisomerisierung kurzkettiger unverzweigter Olefine katalysierenden Kieselsäure-Modifikationen der obigen allgemeinen Formel enthaltenden Katalysator-Additive, im übrigen herkömmlicher Zusammensetzung, herkömmlichen FCC-Katalysatoren in Mengen von 2 bis 30 Masse-% zugemischt werden, bei nach dem standardisierten MAT-TEST (Micro activity test) durchgeführten Versuchen die Isobutenausbeute auf Kosten der anderen Butene signifikant erhöht wird, das heißt, daß innerhalb der Butenfraktion die Konzentrationen der einzelnen Butene nach den durch das thermodynamische Gleichgewicht bedingten Grenzwerten hin verschoben werden.

Im Laufe eigener Untersuchungen wurde auch überraschenderweise festgestellt, daß die mechanischen Eigenschaften der Katalysatorteilchen, insbesondere die Abriebfestigkeit, signifikant verbessert werden, wenn das als Füllstoff verwendete Kaolin(it) teilweise oder ganz durch die obige Kieselsäure-Modifikation ersetzt wird.

Gegenstand der Erfindung ist daher ein Verfahren zur Herstellung von Katalysatoren oder Katalysator-Additiven durch Kneten und/oder Mahlen, Sprühtrocknen und Wärmebehandeln einer die katalytisch aktive Komponente, vorteilhafterweise H-ZSM-5-Zeolith, sowie Aluminiumhydroxid und/oder 1 oder mehr Aluminiumhydroxyverbindung(en) und/oder 1 oder mehr sonstige[s] Bindemittel und Kaolin(it) als Füllstoff und auch 1 oder mehr Verflüssigungsmittel [vgl. Deutsch-Englisches Technik-Wörterbuch Chemie und chemische Technik, 2. Auflage, VEB Verlag Technik, Berlin, 1980] enthaltenden Aufschlämmung, welches dadurch gekennzeichnet ist, daß anstelle von als Füllstoff verwendbarem Kaolin(it) teilweise oder ganz 1 oder mehr Aluminium enthaltende Kieselsäure-Modifikation(en) der allgemeinen Formel (I)

H_{4+y-z}[(SiO_{4/2})_{x-y}(AlO_{4/2})_{y}(SiO_{3/2}O)_{4-z}(AlO_{3/2})_{z}],

worin
y < 1,
z < 1 und
x = 0, 4, 10 oder 16 bis 18 ist,
   wobei,
   falls x = 0 ist,
   auch y = 0 darstellt,
verwendet wird/werden.

Vorzugsweise sind y und z = 0,2 bis 0,6.

Nach einer vorteilhaften Ausführungsform des erfindungsgemäßen Verfahrens wird als Kieselsäure-Modifikation der obigen allgemeinen Formel eine aus Aluminium enthaltendem Magadiit durch Ionenaustausch hergestellte der allgemeinen Formel (I),
worin
- y und z: wie oben festgelegt sind und
- x: 10 ist,
verwendet.

Zweckmäßig werden die obigen Kieselsäure-Modifikationen und Kaolin(it) in etwa gleichen, etwa je 25 Masse-% des Feststoffanteiles der Aufschlämmung ausmachenden Mengen verwendet.

Vorzugsweise beträgt der Trockengehalt der Aufschlämmung 50 bis 60 Masse-%.

Es ist auch bevorzugt, daß der Mengenanteil des Kieselsäure-Derivates, wie der Kieselsäure-Modifikation, in der Aufschlämmung 3 bis 25 Masse-%, insbesondere 10 bis 15 Masse-%, beträgt.

Ferner ist es bevorzugt, daß die Teilchengröße der festen Teile der Aufschlämmung zu mindestens 80% < 10 µm ist.

Weiterhin ist es bevorzugt, daß die Größe der Teilchen des getrockneten Produktes 20 bis 120 µm beträgt.

Bevorzugte Bereiche des Anteiles des Kaolin(it)es, welche durch das angegebene Kieselsäurederivat, wie Kieselsäure-Modifikation, ersetzt sind, sind 40 bis 60 Masse-%.

Gegenstand der Erfindung ist auch ein 1 oder mehr Kieselsäure-Modifikation(en) der obigen allgemeinen Formel (I), worin
y, z und x wie oben festgelegt sind, enthaltender/enthaltendes Katalysator oder Katalysator-Additiv, erhältlich nach dem erfindungsgemäßen Verfahren.

Ferner ist Gegenstand der Erfindung die Verwendung des erfindungsgemäßen Katalysators oder Katalysator-Additives beim Cracken von Erdölfraktionen.

Vorzugsweise dient die erfindungsgemäße Verwendung der Herstellung von Olefinen mit verzweigter Kohlenstoffkette, insbesondere Isobuten. Vorteilhaft wird dabei dieser/dieses Katalysator oder Katalysator-Additiv herkömmlichen FCC-Katalysatoren in Mengenanteilen von 2 bis 30 Masse-% zugemischt eingesetzt.

Die Hauptvorteile der Erfindung sind wie folgt:
a) Innerhalb der Butenfraktion des Crackproduktes wird die Menge des zur Herstellung von Methyl-tert.-butyl-äther, einem zur Erhöhung der Octanzahl dienenden Additiv, eingesetzten Isobutenes erhöht.
b) Es werden Produkte mit besseren mechanischen Eigenschaften, wie von größerer Abriebfestigkeit, erhalten.
c) Der/das erfindungsgemäße Katalysator oder Katalysator-Additiv ist auf einfache Weise und mit herkömmlichen verfahrenstechnischen bzw. technologischen Vorrichtungen herstellbar.

Die Erfindung wird an Hand der folgenden Beispiele näher erläutert.

### Beispiel 1

Es wurden lufttrockener H-ZSM-5-Zeolith, Kaolin und eine
- im Falle des in der folgenden Tabelle 1 angegebenen, mit der Zahl 1 bezeichneten Katalysator-Additives aus mit Aluminium isomorph substituiertem Magadiit hergestellte - kristalline Kieselsäure-Modifikation mit Schichtstruktur in den in der Tabelle 1 angegebenen Gewichtsverhältnissen mit einer solchen Menge einer Aluminiumhydroxychlorid-Lösung aufgeschlämmt, daß der Trockengehalt der Aufschlämmung 60 Masse-% betrug. Der Schlamm wurde 40 Stunden lang in einer Kugelmühle gemahlen, um zu erreichen, daß 95 Masse-% der festen Teilchen der Aufschlämmung kleiner als 10 µ waren. Die mit einem Rotationsviskosimeter gemessene Viskosität der Aufschlämmung betrug bei 3 s⁻¹ 2 500 mPa.s und bei 1 000 s⁻¹ 200 mPa.s. Die Aufschlämmung wurde in einem Zerstäubungstrockner bei einer Eintrittstemperatur von 300°C und einer Austrittstemperatur von 140°C getrocknet, wobei die Betriebsparameter der Zerstäubungsscheibe so gewählt wurden, daß der Durchmesser der kugelförmigen oder annähernd kugelförmigen Teilchen des getrockneten Produkts zwischen 20 und 100 µm lagen. Das Produkt wurde dann zur Erlangung der entsprechenden Abriebfestigkeit im elektrischen Ofen auf Trockenblechen ausgebreitet 10 Stunden lang bei 550°C calciniert.

Die für die Abriebfestigkeit des so erhaltenen fluidisierbaren FCC-Katalysator-Additives [Katalysator-Additiv 1] kennzeichnenden Daten sind zusammen mit denen eines Katalysator-Additives herkömmlicher Zusammensetzung [Katalysator-Additiv 2] in der folgenden Tabelle 1 zusammengestellt.

**Tabelle 1**

| Zusammensetzung und Abriebfestigkeitseigenschaften | Katalysator-Additiv 1 erfindungsgemäßer Zusammensetzung | Katalysator-Additiv 2 herkömmlicher Zusammensetzung |
|---|---|---|
| H-ZSM-5 | 25 Masse-% | 25 Masse-% |
| Kaolin | 30 Masse-% | 55 Masse-% |
| | | |
| Kieselsäure¹⁾ | 25 Masse-% | --- |
| Aluminiumhydroxid | 20 Masse-% | 20 Masse-% |
| Abrieb²⁾ | 6,0 Masse-% | 12,5 Masse-% |
| Davison Attrition Index³⁾ | 0,87 | 2,85 |
| Jersey Index⁴⁾ | 0,002 | 0,14 |

| | | |
|---|---|---|
| ¹⁾ Aus aluminiumhaltigem Magadiit durch Ionenaustausch hergestellte kristalline Kieselsäure mit Schichtstruktur | | |
| ²⁾ Anteil der Teilchen mit Durchmessern kleiner als 40 µm nach unter standardisierten Bedingungen vorgenommenem 30-Minuten langem Mahlen der Siebfraktion über 40 µm. | | |
| ³⁾ Bestimmt nach US-A-3 957 689. | | |
| ⁴⁾ Bestimmt nach der US-A-3 957 689 aus dem Abrieb der zweiten 10 Minuten. | | |

### Beispiel 2

Die auf die im Beispiel 1 beschriebene Weise hergestellten Katalysator-Additiv 1 erfindungsgemäßer Zusammensetzung und Katalysator-Additiv 2 herkömmlicher Zusammensetzung wurden jeweils in Mengen von 5 Masse-% mit einem handelsüblichen FCC-Katalysator, der ultrastabilisierten, mit Seltenenerd-Ionen ausgetauschten Y-Zeolith enthielt, vermischt und anschließend bei 750°C 6 Stunden lang einer Wasserdampfatmosphäre (1 bar) ausgesetzt. Die sich auf das katalytische Cracken beziehende Aktivität und Selektivität der Katalysatorgemische wurden nach dem detailliert beschriebenen MAT-Test (Oil and Gas Journal, 60 bis 63, November 22, 1971) unter strikter Einhaltung der sich auf die Versuchsparameter und die Ausführung der Testapparatur beziehenden Vorschriften untersucht. Die für die Erfindung relevanten Ergebnisse sind in der folgenden Tabelle 2 zusammengestellt.

**Tabelle 2**

| Parameter | Katalysator-Additiv 1 erfindungsgemäßer Zusammensetzung | Katalysator-Additiv 2 herkömmlicher Zusammensetzung |
|---|---|---|
| Umwandlung in Masse-% | 72,2 | 72,2 |
| (C₃-C₄)-Olefinausbeute in Masse-% | 14,8 | 14,7 |
| C₄-Olefine in Masse-% | 8,0 | 8,1 |
| Koks in Masse-% | 3,7 | 3,6 |
| Benzinausbeute in Masse-% | 45 | 45 |
| Isobuten/Gesamtbuten | 33,7 | 30,5 |
| MON (Motor-Octanzahl) | 81,2 | 81,0 |
| RON (Research-Octanzahl) | 94,5 | 94,3 |

Aus der obigen Tabelle 2 geht hervor, daß bei gleicher Bruttoumwandlung und Koksbildung mit dem erfindungsgemäßen Katalysator-Additiv mehr Isobuten als mit dem herkömmlichen Katalysator-Additiv erhalten wird.

## Patentansprüche

1. Verfahren zur Herstellung von Katalysatoren oder Katalysator-Additiven durch Kneten und/oder Mahlen, Sprühtrocknen und Wärmebehandeln einer die katalytisch aktive Komponente, vorteilhafterweise H-ZSM-5-Zeolith, sowie Aluminiumhydroxid und/oder 1 oder mehr Aluminiumhydroxyverbindung(en) und/oder 1 oder mehr sonstige[s] Bindemittel und Kaolin(it) als Füllstoff und auch 1 oder mehr Verflüssigungsmittel enthaltenden Aufschlämmung, dadurch gekennzeichnet, daß man anstelle von als Füllstoff verwendbarem Kaolin(it) teilweise oder ganz 1 oder mehr Aluminium enthaltende Kieselsäure-Modifikation(en) der allgemeinen Formel
H_{4+y-z}[(SiO_{4/2})_{x-y}(AlO_{4/2})_{y}(SiO_{3/2}O)_{4-z}(AlO_{3/2})_{z}],
worin
y < 1,
z < 1 und
x = 0, 4, 10 oder 16 bis 18 ist,
wobei,
falls x = 0 ist,
auch y = 0 darstellt,
verwendet.

2. Verfahren nach Anspruch 1, dadurch gekennzeichnet, daß man als Kieselsäure-Modifikation eine aus Aluminium enthaltendem Magadiit durch Ionenaustausch hergestellte der allgemeinen Formel von Anspruch 1, worin
y und z wie im Anspruch 1 festgelegt sind und
x 10 ist,
verwendet.

3. Ein 1 oder mehr Kieselsäure-Modifikation(en) der allgemeinen Formel von Anspruch 1,
worin
y, z und x wie im Anspruch 1 oder 2 festgelegt sind,
enthaltender/enthaltendes Katalysator oder Katalysator-Additiv, erhältlich nach dem Verfahren nach Anspruch 1 oder 2.

4. Verwendung des Katalysators oder Katalysator-Additives nach Anspruch 3 beim Cracken von Erdölfraktionen.

5. Verwendung nach Anspruch 4 zur Herstellung von Olefinen mit verzweigter Kohlenstoffkette, insbesondere Isobuten.

## Claims

1. Process for the preparation of catalysts or catalyst additives by kneading and/or grinding, spray-drying and heat-treating a suspension containing a catalytically active component, preferably H-ZSM-5 zeolite, as well as aluminium hydroxide and/or one or more aluminium hydroxy compound(s) and/or one or more other binding agent(s) and kaolin(ite) as filling material and also one or more fluxing material(s), which comprises using one or more aluminium-containing silicic acid modification(s) of formula
H_{4+y-z}[(SiO_{4/2})_{x-y}(AlO_{4/2})_{y}(SiO_{3/2}O)_{4-z}(AlO_{3/2})_{z}], (I)
wherein
y is less than 1;
z is less than 1;
and x is 0, 4, 10, or 16 to 18,
where
if x is 0,
then also y is 0,
instead of the kaolin(ite) or a part thereof to be used as filling material.

2. A process according to claim 1, which comprises using a silicic acid modification of formula (I) according to claim 1, wherein
y and z are as defined in claim 1 and
x is 10,
prepared from an aluminium-containing magadiite by ion exchange.

3. A catalyst or catalyst additive which contains one or more silicic acid modification(s) of general formula (I) of claim 1, wherein
y, z and x are as defined in claim 1 or 2,
which can be obtained according to the process of claim 1 or 2.

4. Use of the catalyst or catalyst additive for cracking of mineral oil fractions.

5. Use as claimed in claim 4 for preparing branched-chain olefines, particularly isobutene.

## Revendications

1. Procédé pour préparer des catalyseurs ou des additifs de catalyseurs à l'aide du pétrissage et/ou de la mouture, du séchage par aspersion et du traitement thermique d'une bourbe contenant les composants actifs du point de vue catalytique, de préférence de la H-ZSM-5-zéolithe ainsi que de l'hydroxyde d'aluminium et/ou un ou de plusieurs composé(s) d'hydroxyde d'aluminium et/ou une ou plusieurs autre(s) matière(s) liante(s) et du kaolin ou de la kaolinite à titre de matière de remplissage, ainsi qu'une ou plusieurs matière(s) liquéfiante(s), caractérisé en ce que l'on met en oeuvre à titre de matière de remplissage, à la place du kaolin ou de la kaolinite, en partie ou exclusivement, une ou plusieurs modification(s) d'acide silicique contenant de l'aluminium, représentée(s) par la formule générale
H_{4+y-z}[(SiO_{4/2})_{x-y}(AlO_{4/2})_{y}(SiO_{3/2}O)_{4-z}(AlO_{3/2})_{z}]
dans laquelle
y < 1,
z < 1, et
x = 0, 4, 10 ou 16 à 18,
où
si x = 0
y = 0 également.

2. Procédé selon la Revendication 1, caractérisé en ce que l'on met en oeuvre à titre de modification d'acide silicique une modification d'acide silicique préparée par échange d'ions à partir de magadiite contenant de l'aluminium, représentée par la formule générale selon la Revendication 1,
dans laquelle
y et z sont tels que définis dans la Revendication 1 et x égale 10.

3. Un catalyseur ou un additif de catalyseur préparé selon le procédé de la Revendication 1 ou 2, et qui contient une ou plusieurs modification(s) d'acide silicique correspondant à la formule générale de la Revendication 1,
dans laquelle
y, z et x sont tels que définis dans la Revendication 1 ou 2.

4. Mise en application du catalyseur ou de l'additif de catalyseur selon la Revendication 3, lors du crackage de fractions d'huile minérale.

5. Mise en application selon la Revendication 4 pour préparer des oléfines à chaîne de carbone ramifiée, en particulier des isobuténes.
